(19) **Europäisches Patentamt / European Patent Office / Office européen des brevets**

(11) **EP 4 078 193 B1**

(12) **EUROPEAN PATENT SPECIFICATION**

(45) Date of publication and mention
of the grant of the patent:
**23.04.2025 Bulletin 2025/17**

(21) Application number: **20828163.4**

(22) Date of filing: **15.12.2020**

(51) International Patent Classification (IPC):
***G01Q 60/32*** *(2010.01)*    ***G01Q 70/06*** *(2010.01)*

(52) Cooperative Patent Classification (CPC):
**G01Q 70/06; G01N 29/0681; G01N 29/225;
G01N 29/262; G01N 29/265; G01Q 60/32;**
G01N 2291/0427; G01N 2291/106;
G01N 2291/2697

(86) International application number:
**PCT/NL2020/050791**

(87) International publication number:
**WO 2021/125947 (24.06.2021 Gazette 2021/25)**

(54) **A METHOD AND SYSTEM FOR PERFORMING SUB-SURFACE MEASUREMENTS ON A SAMPLE**

VERFAHREN UND VORRICHTUNG, UM UNTEROBERFLÄCHEMESSUNGEN AUF EINER PROBE
ZU ERLEDIGEN

MÉTHODE ET SYSTÈME POUR OPÉRER DES MESURES SOUS LA SURFACE D'UN
ÉCHANTILLON

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.12.2019  NL 2024467**

(43) Date of publication of application:
**26.10.2022  Bulletin 2022/43**

(73) Proprietor: **Nearfield Instruments B.V.
3047 AT Rotterdam (NL)**

(72) Inventor: **ZABBAL, Paul
3047 AT Rotterdam (NL)**

(74) Representative: **V.O.
P.O. Box 87930
2508 DH Den Haag (NL)**

(56) References cited:
**EP-A1- 3 385 725    CN-A- 104 965 105**

**Description**

FIELD OF THE INVENTION

The invention relates to a method for performing sub-surface measurements on a sample using a scanning probe microscopy system. The invention further relates to a scanning probe microscopy system for performing sub-surface measurements on a sample. Furthermore, the invention relates to a computer program product.

BACKGROUND TO THE INVENTION

Scanning probe microscopy (SPM) devices, such as atomic force microscopy (AFM) devices are for example applied in the semiconductor industry for scanning of semiconductor topologies on a surface, for characterization of the semiconductor. Other uses of this technology are found in biomedical industry, nanotechnology, and scientific applications. In particular, AFM may be used for critical dimensions metrology (CD-metrology), particle scanning, stress- and roughness measurements. AFM microscopy allows visualization of surfaces at very high accuracy, enabling visualization of surface elements at sub-nanometer resolution. Other surface scanning measurement devices for example include optical near field scanning devices.

The probe in a SPM system comprises a cantilever and a probe tip. On one end of the cantilever, the probe is attached to a sensor head, for example (but not necessarily) through an actuator that allows to bring the probe in motion. Probe tip is usually located on the other end of the cantilever. In SPM, the probe tip can be scanned over the surface of a sample or substrate to measure the topography and mechanical properties thereof. A sensor, in many cases an optical sensor, monitors the position of the probe tip. For example, the sensor may monitor a reflected laser beam that is reflected by the cantilever or the back of the probe tip, and which changes angle when the probe tip moves up or down.

Often, there is a desire to reliably quantify dimensions of a sample, including sub-surface dimensions or features of the sample. It can be challenging to accurately detect sub-surface features in the semiconductor industry. For example, in a sample or substrate with a multi-layer stack (e.g. semiconductor), the signal-to-noise ratio (SNR) may be low as the frequency used is often from GHz up to THz, which can make ultrasound imaging rather difficult. Moreover, the stack mechanical properties are usually unknown. As there could be an opaque layer, optical methods are often limited.

There is a need for detecting sub-surface features using non-destructive evaluation method. The sub-surface features may be buried deep in a structure, for example from a few hundreds of nanometers to micrometers deep. It is desired to accurately be able to extract relevant dimension, which can be used for defect inspection and/or process control.

It is noted that EP3385725 (A1) discloses a method of performing subsurface imaging of embedded structures underneath a substrate surface, using an atomic force microscopy system. The system comprises a probe with a probe tip, and a sensor for sensing a position of the probe tip. The method comprises the steps of: positioning the probe tip relative to the substrate; applying a first acoustic input signal to the substrate; applying a second acoustic input signal to the substrate; detecting an output signal from the substrate in response to the first and second acoustic input signal; and analyzing the output signal. In an embodiment the atomic force microscopy system used therewith comprises a probe tip array with which a planar acoustic wave is emitted in the sample. A return signal is analyzed to visualize sub-surface structures.

It is further noted that CN104965105 (A) discloses an AFM probe array integrated with ultrasonic energy transducer. The AFM probe array includes a base which is rectangular in shape; a plurality of micro-cantilevers which are connected with one side edge of the base, and a plurality of ultrasonic energy transducers, wherein each micro-cantilever is provided with a needle tip, the ultrasonic energy transducers are arranged on the back sides of the micro-cantilevers or the back side of the base, and the micro-cantilevers and the ultrasonic energy transducers form the probe array. The probe integrated with the ultrasonic energy transducers renders possible inside imaging of samples.

SUMMARY OF THE INVENTION

It is an object of the invention to provide for a method and a system that obviates at least one of the above mentioned drawbacks.

Additionally or alternatively, it is an object of the invention to provide for a method and system able to more accurately perform sub-surface characterization.

Additionally, it is an object of the invention to provide for an improved ultrasound sample characterization method, using a scanning probe microscope.

Thereto, the invention provides for a method as claimed in claim 1 for performing sub-surface measurements on a sample using a scanning probe microscopy system.

The method provides for an improved subsurface measurement technique for the semiconductor industry. By means of emission of multiple plane waves, at an angle with respect to each other, the SNR can be significantly enhanced.

Advantageously, the resulting SNR obtained by means of the invention can be significantly higher than a SNR obtained with a conventional synthetic transmit aperture method or other conventional methods known in the art. It is possible to more accurately image subsurface features and/or possible defects, such as voids, inside a sample (e.g. substrate or semiconductor device). It is possible to scan a large area, e.g. at least the size of the cantilevers of the array of probes, at one or more specific locations of the sample. It is also possible to move the array of probes for performing a plurality of measurements.

A transfer function of the whole array is determined based on the successive measurements.

Optionally, the plurality of different angles are selected based on a desired region of interest in the sample to be characterized.

Optionally, the plurality of different angles of inclination are chosen within a range between a first angle and a second angle, wherein the first angle is smaller than the second angle, wherein the first angle is larger than -90 degrees, and wherein the second angle is smaller than +90 degrees.

Optionally, the plurality of angles are chosen at regular intervals in the range from the first angle to the second angle.

Optionally, the range is centered around 0 degrees.

Optionally, the range is narrower than -65 degrees to +65 degrees.

Optionally, the successive measurements are used for determining at least one of a depth, size, height or width of one or more subsurface features in the sample, using acoustic material properties of the sample.

If the acoustic properties of the material are known, it is possible to retrieve the depth of the subsurface features and even get other dimensions (such as height and/or width).

Optionally, the array of probes has more than two probes, more preferably more than three, even more preferably more than five probes.

Optionally, the array of probes form a phased array including a plurality of probes regularly spaced in a line and separated by a pitch distance.

Subsurface imaging may be carried out taking into account a predetermined spacing and a predetermined pitch distance.

Optionally, the system includes a plurality of array of probes positioned in a matrix arrangement.

The matrix arrangement may include a plurality of rows or arrays of probes positioned next to each other (e.g. in parallel). Different configurations are possible.

Optionally, data indicative of the ultrasonic tilted planar waves emitted during the successive measurements at the plurality of different angles are stored in an emitter matrix, and data indicative of the return signals retrieved by each of the cantilevers are stored in a reception matrix, wherein the transfer matrix is determined based on the emitter matrix and the reception matrix.

Optionally, signals used for emitting waves into the sample are coded for increasing the signal-to-noise ratio of the guided measurement.

According to an aspect, the invention provides for a scanning probe microscopy system as claimed in claim 13.

According to an aspect, the invention provides for a computer program product as claimed in claim 14.

BRIEF DESCRIPTION OF THE DRAWING

The invention will further be elucidated on the basis of exemplary embodiments which are represented in a drawing. The exemplary embodiments are given by way of non-limitative illustration. It is noted that the figures are only schematic representations of embodiments of the invention that are given by way of non-limiting example.

In the drawing:

Fig. 1 shows a schematic diagram of an embodiment of a system;
Fig. 2 shows a schematic diagram of an embodiment of a system;
Fig. 3 shows a schematic diagram of a measurement;
Fig. 4a and 4b show a schematic diagram of a characterization of a subsurface feature; and
Fig. 5 shows a schematic diagram of a method.

DETAILED DESCRIPTION

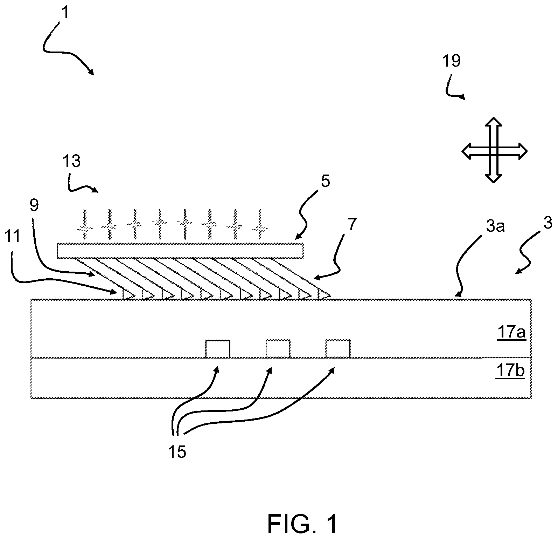

Fig. 1 shows a schematic diagram of an embodiment of a system 1. The system 1 is a scanning probe microscopy system for performing sub-surface measurements on a sample. The system 1 includes a sensor head 5 comprising an array of probes 7 with a plurality of probes each comprising a cantilever 9 and a probe tip 11 arranged on the cantilever 9. The system 1 further comprises a processor configured for applying a method according to the invention, the method including the steps of: moving the array of probes 7 towards a surface 3a of the sample 3 for enabling contact between the probe tips 11 of the array of probes 7 and the surface 3a, and performing successive measurements in which the cantilevers 9 are vibrated for emitting successive ultrasonic tilted planar waves 12 in the sample 3, and a corresponding return signal is retrieved by means of the cantilevers in response to said emitted ultrasonic tilted planar waves 12, and wherein the planar waves 12 are emitted consecutively at a plurality of different angles of inclination with respect to the surface 3a of the sample 3.

In the shown example, the sample is a multi-layer sample 3 including a first layer 17a and a second layer 17b. It will be appreciated that also a single layer sample 3 can be used. It is also possible to use a sample 3 with a larger number of layers.

The sensor head 5 and the sample 3 can be moveable with respect to each other as indicated by arrows 19. The array of probes 7 may be moveable with respect to the sample along a surface 3a therefor for performing multiple measurements at different locations on said surface 3a. It will be appreciated that other relative moving directions are also possible.

In some examples, a set of cantilevers 9 can be placed in a line regularly spaced separated by a pitch. Optionally, the cantilevers or probes can be arranged in a matrix arrangement (e.g. multi-array). In some examples, the arbitrary waveform is generated with as many channels as the number of cantilevers in the array of probes. For example, an ultrasound piezo/PZT phased arrays may have between 32 up to 256 transducers or probes. However other numbers are also possible, for instance up to thousands of probes (e.g. piezo/PZT transducers). Different excitation mechanisms can be employed for the cantilevers, such as at least one of piezo, photo-thermal, etc. Also many variants of reception systems for the cantilevers can be employed. Examples are piezo-electric (PZT), optical beam deflection (OBD), etc.

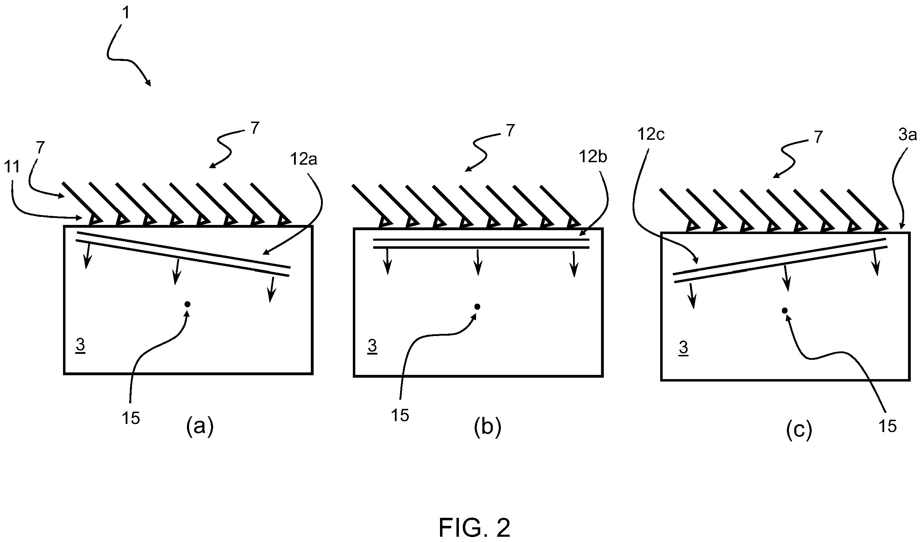

Fig. 2 shows a schematic diagram of an embodiment of a system 1 for performing sub-surface measurements on a sample 3. The system 1 is a scanning probe microscopy system 1 including an array of probes 7. The probes of the array of probes 7 may have a predetermined spacing therebetween. The array of probes 7 can be moved towards the surface 3a of the sample 3 for enabling contact between the probe tips 11 and the surface 3a. At this point a number of measurements may be carried out by coordinately actuating the cantilevers of the array of probes 7. In this shown example, the sample includes one subsurface feature 15 therein. A number of successive measurements are carried out in which the cantilevers are vibrated for emitting successive ultrasonic tilted planar waves in the sample. Three successive measurements in which tilted planar waves are emitted within the sample 3 are exemplary illustrated in steps (a), (b) and (c) of fig. 2. After emission of a tilted planar wave, a corresponding return signal can be retrieved by means of the probe tips 11 of the cantilevers 7. The planar waves 12 can be emitted consecutively at a plurality of different angles of inclination with respect to the surface 3a of the sample 3, as illustrated in steps (a)-(c).

The method enables detection of subsurface features buried in a semiconductor device based on ultrasound imaging technique. An ultrafast scanning method can be obtained. Instead of having a unique emitter each time, plane-waves can be emitted consecutively at several angles in order to improve the SNR.

The method according to the invention can be seen as a plane wave imaging technique, wherein a plane wave is emitted at different angles. The probes in the array of probes 7 can be coordinately actuated for adaptive beamforming. In an advantageous example, this can be performed by having some delay lines for the emission.

The algorithm can be defined for the synthetic aperture as:

$$ A(P) = |\sum_{q=1}^{Q} \sum_{j=1}^{N} \Omega_q^e(P) W_j^r(P) s_{qj}(t_q^e(P) + t_j^r(P))| $$

With A being the amplitude, P being the depth, Q being the number of plane waves, N being the number of receivers, W and $\Omega$ being ponderation factors for both the emission and the reception, $s_{qj}$ is the analytical signal corresponding to the Hilbert Transform of the measured signal $m_{qj}$ for the $q$-plane wave with the $j$-receiver. Furthermore, $t_q^e$ is the time-of-flight for the q-plane wave to reach the focusing point $P$, and $t_j^r$ is the time-of-flight between focusing point $P$ and the receiver $j$

Several plane waves can be emitted at different angles, giving a transfer matrix K with an improved SNR compared to other techniques, such as for instance the conventional synthetic transmit aperture (STA) method.

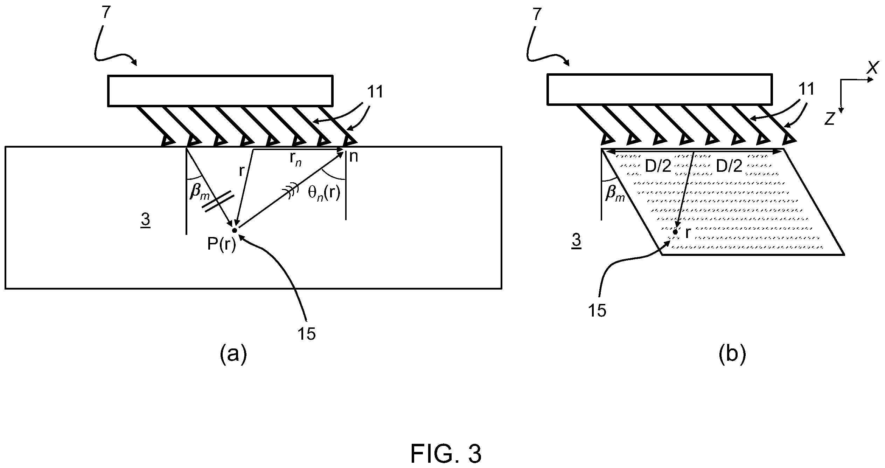

Fig. 3 shows a schematic diagram of a measurement, wherein a plane wave is emitted at an angle $\beta_m$ with respect to the surface 3a of the sample 3. A zone of interest can be defined by said angle $\beta_m$. The plurality of different angles of the plane waves in the successive measurements can be selected based on a desired region of interest in the sample to be characterized.

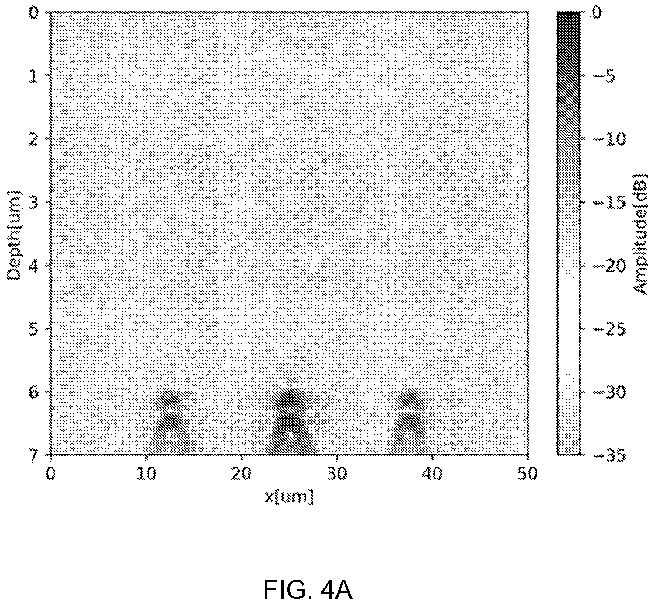

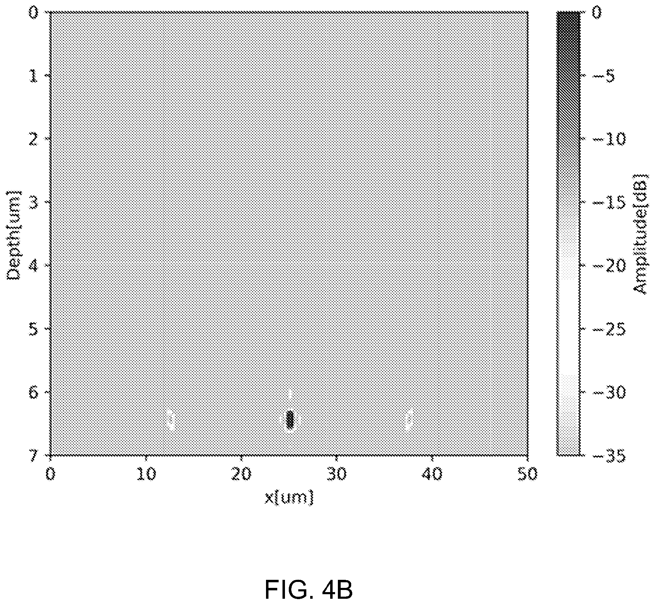

Fig. 4a and 4b show a schematic diagram of a characterization of a subsurface feature. The images are obtained using two different methods. The first image (a) is obtained by employing a conventional synthetic transmit aperture (STA) technique. The second image (b) is obtained by employing a plane wave imaging (PWI) according to the present invention.

As clearly illustrated in fig. 4b, significant improvement of imaging can be obtained compared to a convention method of synthetic transmit aperture (STA). The SNR can be enhanced (e.g. 20dB) compared to conventional methods such as the STA method.

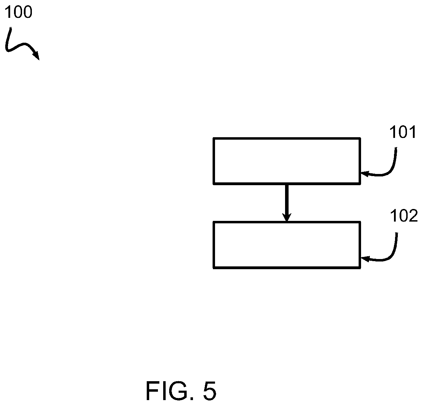

Fig. 5 shows a schematic diagram of a method 100 for performing sub-surface measurements on a sample using a scanning probe microscopy system. The system comprises a sensor head including an array of probes with a plurality of probes each comprising a cantilever and a probe tip arranged on the cantilever. In a first step 101 of the method, the array of probes is moved towards a surface of the sample for enabling contact between the probe tips of the array of probes and the surface. In a second step 102, successive measurements are performed in which the cantilevers are vibrated for emitting successive ultrasonic tilted planar waves in the sample, and a corresponding return signal is retrieved by means of the cantilevers in response to said emitted ultrasonic tilted planar waves. The planar waves are emitted consecutively at a plurality of different angles of inclination with respect to the surface of the sample.

It will be appreciated that the method may include computer implemented steps. All above mentioned steps can be computer implemented steps. Embodiments may comprise computer apparatus, wherein processes performed in computer apparatus. The invention also extends to computer programs, particularly computer programs on or in a carrier, adapted for putting the invention into practice. The program may be in the form of source or object code or in any other form suitable for use in the implementation of the processes according to the invention. The carrier may be any entity or device capable of carrying the program. For example, the carrier may comprise a storage medium, such as a ROM, for example a semiconductor ROM or hard disk. Further, the carrier may be a transmissible carrier such as an electrical or optical signal which may be conveyed via electrical or optical cable or by radio or other means, e.g. via the internet or cloud.

Some embodiments may be implemented, for example, using a machine or tangible computer-readable medium or article which may store an instruction or a set of instructions that, if executed by a machine, may cause the machine to perform a method and/or operations in accordance with the embodiments.

Various embodiments may be implemented using hardware elements, software elements, or a combination of both. Examples of hardware elements may include processors, microprocessors, circuits, application specific integrated circuits (ASIC), programmable logic devices (PLD), digital signal processors (DSP), field programmable gate array (FPGA), logic gates, registers, semiconductor device, microchips, chip sets, et cetera. Examples of software may include software components, programs, applications, computer programs, application programs, system programs, machine programs, operating system software, mobile apps, middleware, firmware, software modules, routines, subroutines, functions, computer implemented methods, procedures, software interfaces, application program interfaces (API), methods, instruction sets, computing code, computer code, et cetera.

Herein, the invention is described with reference to specific examples of embodiments of the invention. It will, however, be evident that various modifications, variations, alternatives and changes may be made therein, without departing from the scope of the claims. For the purpose of clarity and a concise description features are described herein as part of the same or separate embodiments, however, alternative embodiments having combinations of all or some of the features described in these separate embodiments are also envisaged and understood to fall within the framework of the invention as outlined by the claims. The specifications, figures and examples are, accordingly, to be regarded in an illustrative sense rather than in a restrictive sense. The invention is intended to embrace all alternatives, modifications and variations which fall within the scope of the appended claims. Further, many of the elements that are described are functional entities that may be implemented as discrete or distributed components or in conjunction with other components, in any suitable combination and location.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean 'at least one', and do not exclude a plurality.

**Claims**

1. A method (100) for performing sub-surface measurements on a sample (3) using a scanning probe microscopy system (1), the system comprising a sensor head (5) including an array of probes (7) with a plurality of probes each comprising a probe tip , the method comprising the steps of:

   moving (101) the array of probes towards a surface of the sample for enabling contact between the probe tips (11) of the array of probes and the surface, and
   performing (102) measurements wherein ultrasonic tilted planar waves (12) are emitted in the sample, and a corresponding return signal is retrieved in response to said emitted ultrasonic tilted planar waves, and

   **characterized in that** each probe (7) comprises a cantilever (9), the probe tip (11) being arranged on the cantilever, **in**

that the measurements are successive, in which measurements the cantilevers (9) are vibrated for emitting the ultrasonic planar waves and the corresponding return signal is retrieved by means of the cantilevers, **in that** the planar waves are emitted consecutively at a plurality of different angles of inclination with respect to the surface of the sample, and **in that** a transfer function (K) of the whole array is determined based on the successive measurements.

2. Method (100) according to claim 1, wherein the plurality of different angles are selected based on a desired region of interest in the sample (3) to be characterized.

3. Method (100) according to any of the preceding claims, wherein the plurality of different angles of inclination are chosen within a range between a first angle and a second angle, wherein the first angle is smaller than the second angle, wherein the first angle is larger than -90 degrees, and wherein the second angle is smaller than +90 degrees.

4. Method (100) according to claim 3, wherein the plurality of angles are chosen at regular intervals in the range from the first angle to the second angle.

5. Method (100) according to claim 3 or 4, wherein the range is centered around 0 degrees.

6. Method (100) according to any one of the preceding claims, wherein the range is narrower than -65 degrees to +65 degrees.

7. Method (100) according to any one of the preceding claims, wherein the successive measurements are used for determining at least one of a depth, size, height or width of one or more subsurface features (15) in the sample (3), using acoustic material properties of the sample (3).

8. Method (100) according to any one of the preceding claims, wherein the array of probes (7) has more than two probes, more preferably more than three, even more preferably more than five probes.

9. Method (100) according to any one of the preceding claims, wherein the array of probes (7) form a phased array including a plurality of probes regularly spaced in a line and separated by a pitch distance.

10. Method (100) according to any one of the preceding claims, wherein the system includes a plurality of array of probes (7) positioned in a matrix arrangement.

11. Method (100) according to any one of the preceding claims, wherein data indicative of the ultrasonic tilted planar waves (12) emitted during the successive measurements at the plurality of different angles are stored in an emitter matrix, and data indicative of the return signals retrieved by each of the cantilevers are stored in a reception matrix, wherein the transfer matrix (K) is determined based on the emitter matrix and the reception matrix.

12. Method (100) according to any one of the preceding claims, wherein signals used for emitting waves into the sample are coded for increasing the signal-to-noise ratio of the guided measurement.

13. A scanning probe microscopy system (1) for performing sub-surface measurements on a sample (3), the system including a sensor head (5) including an array of probes (7) with a plurality of probes each comprising a probe tip , wherein the system further comprises a processor configured for applying a method (100) defined in any one of the previous claims, wherein the processor is arranged for:

   moving (101) the array of probes (7) towards a surface of the sample (3) for enabling contact between the probe tips (11) of the array of probes and the surface, and
   performing (102) measurements in which ultrasonic tilted planar waves are emitted in the sample, and a corresponding return signal is retrieved in response to said emitted ultrasonic tilted planar waves, and

   **characterized in that** the probes each comprise a cantilever and a probe tip arranged on the cantilever, **in that** the measurements are successive, the cantilevers (9) are vibrated for emitting the ultrasonic planar waves in the sample and wherein the corresponding return signal is retrieved by means of the cantilevers, **in that** the planar waves are emitted consecutively at a plurality of different angles of inclination with respect to the surface of the sample and **in that** a transfer function of the whole array is determined based on the successive measurements.

14. A computer program product downloadable from a communication network and/or stored on a computer-readable and/or microprocessor-executable medium, comprising program code instructions that, when executed by a scanning probe microscopy system (1) including a processor, causes the system to perform a method according to any one of the preceding claims 1-12, the scanning probe microscopy system including a sensor head (5) including an array of probes (7) with a plurality of probes each comprising a cantilever (9) and a probe tip (11) arranged on the cantilever.

**Patentansprüche**

1. Verfahren (100) zum Erledigen von Unteroberflächenmessungen auf einer Probe (3) unter Verwendung eines Rastersondenmikroskopie-Systems (1), wobei das System einen Sensorkopf (5) mit einer Anordnung von Sonden (7) mit einer Vielzahl von Sonden umfasst, wobei jede eine Sondenspitze umfasst, wobei das Verfahren die folgenden Schritte umfasst:

   Bewegen (101) der Anordnung von Sonden in Richtung einer Oberfläche der Probe, um einen Kontakt zwischen den Sondenspitzen (11) der Anordnung von Sonden und der Oberfläche zu ermöglichen, und
   Durchführen (102) von Messungen, wobei geneigte ebene Ultraschallwellen (12) in die Probe ausgesendet werden und ein entsprechendes Rücksignal als Reaktion auf die ausgesendeten geneigten ebenen Ultraschallwellen erfasst wird, und

   **dadurch gekennzeichnet, dass** jede Sonde (7) einen Cantilever (9) umfasst, wobei die Sondenspitze (11) auf dem Cantilever angeordnet ist, dass die Messungen aufeinanderfolgend sind, wobei bei den Messungen die Cantilever (9) zum Aussenden der ebenen Ultraschallwellen in Schwingung versetzt werden und das entsprechende Rücksignal mittels der Cantilever abgerufen wird, dass die ebenen Wellen nacheinander bei einer Vielzahl von unterschiedlichen Neigungswinkeln in Bezug auf die Oberfläche der Probe ausgesendet werden und dass eine Übertragungsfunktion (K) der gesamten Anordnung auf der Grundlage der aufeinanderfolgenden Messungen bestimmt wird.

2. Verfahren (100) nach Anspruch 1, wobei die Vielzahl unterschiedlicher Winkel auf der Grundlage eines gewünschten Bereichs von Interesse in der zu kennzeichnenden Probe (3) ausgewählt werden.

3. Verfahren (100) nach einem der vorstehenden Ansprüche, wobei die Vielzahl unterschiedlicher Neigungswinkel innerhalb eines Bereichs zwischen einem ersten Winkel und einem zweiten Winkel gewählt wird, wobei der erste Winkel kleiner als der zweite Winkel ist, wobei der erste Winkel größer als -90 Grad ist und wobei der zweite Winkel kleiner als +90 Grad ist.

4. Verfahren (100) nach Anspruch 3, wobei die Vielzahl von Winkeln in regelmäßigen Abständen im Bereich vom ersten Winkel bis zum zweiten Winkel gewählt werden.

5. Verfahren (100) nach Anspruch 3 oder 4, wobei der Bereich um 0 Grad zentriert ist.

6. Verfahren (100) nach einem der vorstehenden Ansprüche, wobei der Bereich enger als -65 Grad bis +65 Grad ist.

7. Verfahren (100) nach einem der vorstehenden Ansprüche, wobei die aufeinanderfolgenden Messungen zum Bestimmen von Tiefe, Größe, Höhe oder Breite eines oder mehrerer Unteroberflächenmerkmale (15) in der Probe (3) unter Verwendung akustischer Materialeigenschaften der Probe (3) verwendet werden.

8. Verfahren (100) nach einem der vorstehenden Ansprüche, wobei die Anordnung von Sonden (7) mehr als zwei Sonden aufweist, stärker bevorzugt mehr als drei, noch stärker bevorzugt mehr als fünf Sonden.

9. Verfahren (100) nach einem der vorstehenden Ansprüche, wobei die Anordnung von Sonden (7) eine phasengesteuerte Anordnung bildet, die eine Vielzahl von Sonden aufweist, die in einer Linie regelmäßig beabstandet und durch einen Teilungsabstand getrennt sind.

10. Verfahren (100) nach einem der vorstehenden Ansprüche, wobei das System eine Vielzahl der Anordnung von Sonden (7) aufweist, die in einer Matrixanordnung positioniert sind.

11. Verfahren (100) nach einem der vorstehenden Ansprüche, wobei Daten, die auf die während der aufeinanderfolgenden Messungen unter den mehreren verschiedenen Winkeln ausgesendeten geneigten ebenen Ultraschallwellen (12) hinweisen, in einer Sendermatrix gespeichert werden und Daten, die auf die von jedem der Cantilever erfassten Echosignale hinweisen, in einer Empfangsmatrix gespeichert werden, wobei die Übertragungsmatrix (K) auf der Grundlage der Sendermatrix und der Empfangsmatrix bestimmt wird.

12. Verfahren (100) nach einem der vorstehenden Ansprüche, wobei die zum Aussenden von Wellen in die Probe verwendeten Signale zum Erhöhen des Signal-Rausch-Verhältnisses der geführten Messung codiert werden.

13. Rastersondenmikroskopie-System (1) zum Erledigen von Unteroberflächenmessungen auf einer Probe (3), wobei das System einen Sensorkopf (5) aufweist, der eine Anordnung von Sonden (7) mit einer Vielzahl von Sonden aufweist, wobei jede eine Sondenspitze aufweist, wobei das System weiterhin einen Prozessor umfasst, der zum Anwenden eines Verfahrens ( 100) konfiguriert ist, das in einem der vorstehenden Ansprüche definiert ist, wobei der Prozessor angeordnet ist, zum:

Bewegen (101) der Anordnung von Sonden (7) in Richtung einer Oberfläche der Probe (3), um einen Kontakt zwischen den Sondenspitzen (11) der Anordnung von Sonden und der Oberfläche zu ermöglichen, und Erledigen (102) von Messungen, wobei geneigte ebene Ultraschallwellen in die Probe ausgesendet werden und ein entsprechendes Rücksignal als Reaktion auf die ausgesendeten geneigten ebenen Ultraschallwellen empfangen wird, und

**dadurch gekennzeichnet, dass** die Sonden jeweils einen Cantilever und eine auf dem Cantilever angeordnete Sondenspitze umfassen, dass die Messungen aufeinanderfolgend sind, die Cantilever (9) zum Aussenden der ebenen Ultraschallwellen in der Probe in Schwingung versetzt werden und wobei das entsprechende Rücksignal mittels der Cantilever abgerufen wird, dass die ebenen Wellen nacheinander bei einer Vielzahl von unterschiedlichen Neigungswinkeln in Bezug auf die Oberfläche der Probe ausgesendet werden und dass eine Übertragungsfunktion der gesamten Anordnung auf der Grundlage der aufeinanderfolgenden Messungen bestimmt wird.

14. Computerprogrammprodukt, das aus einem Kommunikationsnetz heruntergeladen werden kann und/oder auf einem computerlesbaren und/oder mikroprozessorausführbaren Medium gespeichert ist, umfassend Programmcodeanweisungen, die bei Ausführung durch ein Rastersondenmikroskopie-System (1) mit einem Prozessor das System veranlassen, ein Verfahren nach einem der einem der vorstehenden Ansprüche 1 bis 12 durchzuführen, wobei das Rastersondenmikroskopie-System einen Sensorkopf (5) aufweist, der eine Anordnung von Sonden (7) mit einer Vielzahl von Sonden aufweist, wobei jede einen Cantilever (9) und eine auf dem Cantilever angeordnete Sondenspitze (11) aufweist.

## Revendications

1. Méthode (100) pour réaliser des mesures de sous-surface sur un échantillon (3) en utilisant un système de microscopie à sondes locales (1), le système comprenant une tête de capteur (5) comportant un réseau de sondes (7) avec une pluralité de sondes comprenant chacune une pointe de sonde, la méthode comprenant les étapes choisies parmi :

le déplacement (101) du réseau de sondes vers une surface de l'échantillon pour permettre un contact entre les pointes de sonde (11) du réseau de sondes et la surface, et la réalisation (102) de mesures dans laquelle des ondes planes inclinées ultrasoniques (12) sont émises dans l'échantillon, et un signal de retour correspondant est récupéré en réponse auxdites ondes planes inclinées ultrasoniques émises, et

**caractérisée en ce que** chaque sonde (7) comprend un porte-à-faux (9), la pointe de sonde (11) étant disposée sur le porte-à-faux, **en ce que** les mesures sont successives, dans lesquelles mesures, les porte-à-faux (9) sont amenées à vibrer pour émettre les ondes planes ultrasoniques et le signal de retour correspondant est récupéré au moyen des porte-à-faux, **en ce que** les ondes planes sont émises consécutivement à une pluralité d'angles d'inclinaison différents par rapport à la surface de l'échantillon, et **en ce qu'**une fonction de transfert (K) de l'ensemble du réseau est déterminée sur la base des mesures successives.

2. Méthode (100) selon la revendication 1, dans laquelle la pluralité d'angles différents sont sélectionnés sur la base d'une région d'intérêt souhaitée dans l'échantillon (3) à caractériser.

3. Méthode (100) selon l'une quelconque des revendications précédentes, dans laquelle la pluralité d'angles d'inclinaison différents sont choisis dans une plage comprise entre un premier angle et un second angle, dans laquelle le premier angle est inférieur au second angle, dans lequel le premier angle est supérieur à - 90 degrés, et dans laquelle le second angle est inférieur à +90 degrés.

4.  Méthode (100) selon la revendication 3, dans laquelle la pluralité d'angles sont choisis à intervalles réguliers dans la plage allant du premier angle au second angle.

5.  Méthode (100) selon la revendication 3 ou 4, dans laquelle la plage est centrée autour de 0 degré.

6.  Méthode (100) selon l'une quelconque des revendications précédentes, dans lequel la plage est plus étroite que la plage de -65 degrés à +65 degrés.

7.  Méthode (100) selon l'une quelconque des revendications précédentes, dans laquelle les mesures successives sont utilisées pour déterminer au moins l'une d'une profondeur, d'une taille, d'une hauteur ou d'une largeur d'une ou plusieurs caractéristiques de sous-surface (15) dans l'échantillon (3), en utilisant les propriétés de matériau acoustiques de l'échantillon (3).

8.  Méthode (100) selon l'une quelconque des revendications précédentes, dans laquelle le réseau de sondes (7) a plus de deux sondes, de manière davantage préférée plus de trois, encore plus préférentiellement plus de cinq sondes.

9.  Méthode (100) selon l'une quelconque des revendications précédentes, dans laquelle le réseau de sondes (7) forme un réseau échelonné comportant une pluralité de sondes régulièrement espacées dans une ligne et séparées par une distance de pas.

10. Méthode (100) selon l'une quelconque des revendications précédentes, dans laquelle le système comporte une pluralité de réseaux de sondes (7) positionnés selon un agencement matriciel.

11. Méthode (100) selon l'une quelconque des revendications précédentes, dans laquelle des données indicatives des ondes planes inclinées acoustiques (12) émises pendant les mesures successives à la pluralité d'angles différents sont stockées dans une matrice d'émetteur, et des données indicatives des signaux de retour récupérés par chacun des porte-à-faux sont stockées dans une matrice de réception, dans laquelle la matrice de transfert (K) est déterminée sur la base de la matrice d'émetteur et de la matrice de réception.

12. Méthode (100) selon l'une quelconque des revendications précédentes, dans laquelle des signaux utilisés pour émettre des ondes dans l'échantillon sont codés pour augmenter le rapport signal-bruit de la mesure guidée.

13. Système de microscopie à sondes locales (1) pour réaliser des mesures de sous-surface sur un échantillon (3), le système comportant une tête de capteur (5) comportant un réseau de sondes (7) avec une pluralité de sondes comprenant chacune une pointe de sonde, dans lequel le système comprend en outre un processeur configuré pour appliquer une méthode (100) définie dans l'une quelconque des revendications précédentes, dans lequel le processeur est agencé pour :

> déplacer (101) le réseau de sondes (7) vers une surface de l'échantillon (3) pour permettre un contact entre les pointes de sonde (11) du réseau de sondes et la surface, et
> réaliser (102) des mesures dans lesquelles des ondes planes inclinées ultrasoniques sont émises dans l'échantillon, et un signal de retour correspondant est récupéré en réponse auxdites ondes planes inclinées ultrasoniques émises, et
> **caractérisé en ce que** les sondes comprennent chacune un porte-à-faux et une pointe de sonde disposée sur le porte-à-faux, **en ce que** les mesures sont successives, les porte-à-faux (9) sont amenés à vibrer pour émettre les ondes planes ultrasoniques dans l'échantillon et dans lequel le signal de retour correspondant est récupéré au moyen des porte-à-faux, **en ce que** les ondes planes sont émises consécutivement à une pluralité d'angles d'inclinaison différents par rapport à la surface de l'échantillon et **en ce qu'**une fonction de transfert de l'ensemble du réseau est déterminée sur la base des mesures successives.

14. Produit programme d'ordinateur téléchargeable à partir d'un réseau de communication et/ou stocké sur un support lisible par ordinateur et/ou exécutable par microprocesseur, comprenant des instructions de code de programme qui, lorsqu'elles sont exécutées par un système de microscopie à sondes locales (1) comportant un processeur, amènent le système à réaliser une méthode selon l'une quelconque des revendications 1 à 12 précédentes, le système de microscopie à sondes locales comportant une tête de capteur (5) comportant un réseau de sondes (7) avec une pluralité de sondes comprenant chacune un porte-à-faux (9) et une pointe de sonde (11) agencée sur le porte-à-faux.

FIG. 1

FIG. 2

12

FIG. 3

FIG. 4A

FIG. 4B

100

101

102

FIG. 5

**REFERENCES CITED IN THE DESCRIPTION**

**Patent documents cited in the description**

- EP 3385725 A1

- CN 104965105 A